# FASCICULE DE BREVET EUROPEEN

(11) **EP 1 327 591 B1**
(45) Date de publication et mention de la délivrance du brevet: **29.11.2006**
(21) Numéro de dépôt: 03290075.5
(22) Date de dépôt: 13.01.2003
(51) Int. Cl.: B65G 54/02

(54) **Convoyeur de récipients à moteur lineaire**
Transportvorrichtung für Behälter mit Linearmotor
Conveyor for containers with linear motor

(30) Priorité: 14.01.2002 FR 0200366
(43) Date de publication de la demande: 16.07.2003
(73) Titulaire: Butor, Didier, 59130 Lambersart (FR)
(72) Inventeur: Butor, Didier, 59130 Lambersart (FR)
(74) Mandataire: Callon de Lamarck, Jean-Robert

(56) Documents cités:
- EP-A- 0 963 931
- DE-A- 4 133 114

## Description

L'invention concerne le convoyage de récipients sur une ligne de fabrication. Elle concerne en particulier le convoyage des bouteilles.

On connaît du document WO 97/35791 un convoyeur de bouteilles dans lequel les bouteilles sont supportées tout le long de leur trajectoire par deux guides profilés servant d'appui à un relief annulaire s'étendant sous le col de la bouteille. Ainsi supportées, les bouteilles sont déplacées le long du convoyeur par une technique de soufflage d'air bien connue en elle-même.

Cette technique présente cependant beaucoup d'inconvénients. En effet, elle induit un brassage d'air à l'intérieur de la bouteille, ce qui est à éviter lorsque la bouteille est destinée à une utilisation agro-alimentaire, pharmaceutique ou cosmétique. De plus, la vitesse de déplacement des bouteilles ne peut être commandée que de façon très grossière. En outre, la vitesse maximale de déplacement des bouteilles est relativement basse et ne dépasse pas environ 20 km par heure. Cet inconvénient est particulièrement important puisque, dans une installation de production de boissons performante, ce n'est ni le poste de fabrication des bouteilles, ni le poste de remplissage qui constitue le goulet d'étranglement limitant la cadence de production mais le convoyeur lui-même. Un autre inconvénient de ce convoyeur tient au fait que la bouteille étant en permanence supportée par les guides profilés, les changements de hauteur de convoyage se font nécessairement au moyen de pentes de transition d'inclinaison relativement faible, faute de quoi la bouteille risque de ne pas gravir la pente et d'engendrer des blocages fréquents, voire de chuter.

Par ailleurs, on connaît d'après le document DE-41 33 114 un autre convoyeur pour bouteilles. Les bouteilles sont supportées au niveau de leur col par deux guides profilés s'étendant sur toute la longueur du convoyeur. De plus, le convoyeur comprend des navettes reliées par un bras à chaque bouteille de sorte que chaque navette propulse la bouteille le long du convoyeur. Le convoyeur comprend un moteur linéaire pour le déplacement longitudinal des navettes. Les navettes comportent des roues par l'intermédiaire desquelles elles reposent sur leur chemin de roulement.

Le convoyeur de ce document permet de pallier les problèmes d'hygiène générés dans le précédent document par le brassage de l'air. Toutefois, il ne permet pas d'obtenir une vitesse de convoyage des bouteilles sensiblement plus élevée que celle du précédent document. En effet, des frottements persistent au contact du col avec les guides profilés. De plus, lorsque la vitesse est élevée, les roues produisent des vibrations générant du bruit. On constate en outre que la durée de vie des roues est particulièrement réduite de sorte qu'elles doivent être changées fréquemment, rendant ainsi le convoyeur inutilisable pendant de longues périodes. Enfin, il demeure nécessaire de prévoir des transitions de hauteur de faible inclinaison.

Un but de l'invention est de fournir un convoyeur permettant l'acheminement des bouteilles à plus grande vitesse et en conservant un niveau d'hygiène satisfaisant.

Un autre but de l'invention est de fournir un convoyeur ne générant pas trop de bruit.

Un autre but de l'invention est de fournir un convoyeur n'engendrant pas de trop longues périodes d'immobilisation du convoyeur.

Un autre but de l'invention est de fournir un convoyeur ayant un encombrement global réduit en permettant les transitions de hauteur par des pentes de forte inclinaison.

A cet effet on prévoit selon l'invention un convoyeur de récipients tels que des bouteilles, comportant des moyens de propulsion d'un récipient, ces moyens comprenant un moteur linéaire, et comportant des moyens de sustentation magnétique du récipient.

Ainsi la sustentation magnétique des récipients permet d'augmenter très fortement la vitesse de convoyage jusqu'à faire en sorte que le convoyeur ne constitue plus le goulet d'étranglement de l'installation de production dont il fait partie. En pratique, la vitesse de décrochement d'un moteur linéaire étant dans de nombreux cas de 360 km/heure, on voit que la vitesse d'acheminement peut être accrue dans une très large mesure.

En outre, le récipient n'étant plus nécessairement supporté par les guides profilés sous col, la sustentation magnétique permet de déplacer les récipients sur des pentes de forte inclinaison pour les transitions de hauteur de l'installation, ce qui réduit l'encombrement général du convoyeur. Le niveau d'hygiène demeure satisfaisant. Sachant que les roues ne sont plus nécessaires, le bruit du convoyeur est très faible et l'on ne doit plus craindre des immobilisations prolongées et répétées.

Le convoyeur selon l'invention pourra présenter en outre au moins l'une quelconque des caractéristiques suivantes :
- les moyens de propulsion forment les moyens de sustentation,
- il comprend au moins une navette apte à supporter au moins un récipient, les moyens de propulsion étant aptes à propulser la navette et les moyens de sustentation étant aptes à porter la navette,
- il est agencé de sorte que le récipient est suspendu à la navette,
- il comprend deux rangées parallèles de bobines aptes à coopérer de façon électromagnétique avec la navette,
- il est agencé de sorte que la navette repose sur les rangées de bobines lorsque les moyens de sustentation sont inactifs,
- les bobines de chaque rangée ont un axe incliné vers le haut et vers l'autre rangée de bobines,
- les bobines des deux rangées présentent des faces en regard formant un espace qui va en se rétrécissant vers le bas dans un plan transversal à une direction longitudinale du convoyeur, la navette ayant une forme complémentaire qui va en se rétrécissant vers le bas dans le même plan,
- il est agencé de sorte que chaque bobine peut avoir seulement deux états, à savoir un état dans lequel elle ne produit aucun champ magnétique et un état dans lequel elle produit un champ magnétique tendant à repousser la navette à l'encontre de la gravité,
- elle est agencée de sorte que, lorsque la navette supporte le récipient, la navette laisse libre un accès à l'intérieur du récipient pour remplir le récipient,
- il comprend des moyens pour relier la navette au récipient présentant une dimension radiale variable par rapport à un axe principal du récipient,
- les moyens de liaison sont aptes à relier la navette au récipient en s'étendant à l'intérieur du récipient,
- les moyens de liaison sont aptes à s'étendre en contact avec une partie supérieure rétrécie du récipient,
- les moyens de liaison sont élastiquement flexibles,
- les moyens de liaison comprennent au moins une tige, de préférence au moins deux tiges,
- les moyens de liaison sont agencés pour interrompre la liaison du récipient à la navette lorsque le récipient subit une sollicitation tendant à l'éloigner de la navette et présentant une intensité dépassant un seuil prédéterminé,
- les moyens de liaison sont agencés pour pénétrer dans un orifice rétréci du récipient en réduisant leur dimension radiale par coopération de forme avec l'orifice lorsqu'ils subissent une sollicitation en direction du récipient présentant une intensité dépassant un seuil prédéterminé,
- les bobines ont un axe horizontal,
- il comprend des moyens pour supporter les récipients lorsque les moyens de sustentation sont inactifs,
- les moyens de support comprennent deux profilés aptes à supporter un col des récipients,
- les moyens de propulsion sont agencés pour permettre de commander différentes vitesses de propulsion sur des tronçons différents respectifs du convoyeur, et
- les moyens de propulsion sont agencés pour permettre de propulser un récipient suivant deux sens différents au choix sur un même tronçon du convoyeur.

On prévoit également selon l'invention une installation pour la production d'articles comprenant un récipient, l'installation comprenant un convoyeur selon l'invention.

L'installation pourra présenter en outre au moins l'une quelconque des caractéristiques suivantes :
- elle comprend au moins deux convoyeurs présentant des tronçons respectifs parallèles et contigus l'un à l'autre,
- elle comprend un poste pour le suremballage commun de plusieurs récipients des convoyeurs respectifs, et
- elle comprend au moins l'un parmi les postes suivants :
   - un poste de formage du récipient ;
   - un poste de remplissage du récipient ;
   - un poste de bouchonnage ;
   - un poste de suremballage ; et
   - un poste d'étiquetage.

D'autres caractéristiques et avantages de l'invention apparaîtront encore dans la description suivante de deux modes préférés de réalisation donnés à titre d'exemples non limitatifs.

Aux dessins annexés :
- la figure 1 est une vue en perspective avec arrachement partiel d'un convoyeur selon un premier mode de réalisation de l'invention ;
- la figure 2 est une vue en coupe du convoyeur de la figure 1 selon un plan transversal à la direction longitudinale du convoyeur ;
- la figure 3 est un schéma électrique du principe d'alimentation des bobines du convoyeur de la figure 1 ;
- la figure 4 montre les moyens de préhension de la bouteille dans le convoyeur de la figure 1 et les cinq étapes de leur introduction dans une bouteille ;
- la figure 5 est une vue de dessus des moyens de préhension et de la bouteille de la figure 4 ;
- la figure 6 est une vue d'une partie de l'installation comprenant le convoyeur de la figure 1 ;
- la figure 7 est un schéma de principe de l'ensemble de l'installation de la figure 6 ;
- la figure 8 est une vue en perspective partielle d'un convoyeur selon un deuxième mode préféré de réalisation de l'invention ;
- la figure 9 est une vue en perspective d'une installation comprenant deux convoyeurs selon le deuxième mode de réalisation de la figure 8 ; et
- la figure 10 est une vue d'une autre partie de l'installation de la figure 9.

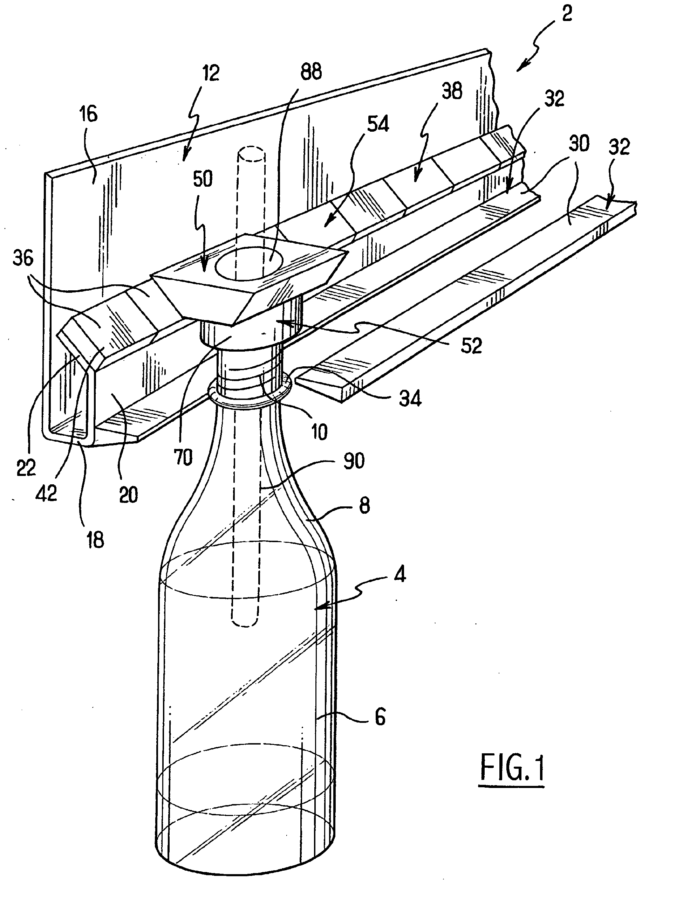

Nous allons décrire en référence aux figures 1 à 7 un premier mode préféré de réalisation du convoyeur selon l'invention. Les récipients destinés à être acheminés sont en l'espèce des bouteilles 4, par exemple en matière plastique, présentant notamment une partie inférieure large 6, une partie supérieure 8 se rétrécissant vers le haut et un col 10 formant une extrémité supérieure de la bouteille au goulot de celle-ci.

Le convoyeur comporte un rail longitudinal 12 formant un capotage du convoyeur. Ce capotage comprend une paroi supérieure 14, deux parois latérales 16 s'étendant verticalement vers le bas à partir des bords longitudinaux de la paroi supérieure et deux parois inférieures 18 s'étendant horizontalement en direction l'une de l'autre à partir des bords inférieurs respectifs des parois latérales 16. Le capotage comprend également deux parois latérales internes 20 s'étendant verticalement vers le haut à partir des bords longitudinaux internes des parois inférieures 18 et deux parois supérieures internes inclinées 22 s'étendant à partir des bords supérieurs des parois 20 en étant inclinées vers le haut et vers l'extérieur. Toutes ces parois sont profilées et ont une forme plane.

Le convoyeur 2 comporte deux guides profilés 30 s'étendant longitudinalement à la jonction entre les parois inférieures 18 et les parois verticales internes 20 respectives. Les deux guides s'étendent en direction l'un de l'autre, à distance l'un de l'autre et parallèlement l'un à l'autre. Ils présentent en particulier une face supérieure 32. Chaque bouteille 4 présente à la base de son col un relief annulaire 34 s'étendant en saillie du col 10. L'écartement entre les guides 30 défini par la distance qui les sépare mutuellement est tel que la bouteille 4 peut reposer par l'intermédiaire du relief 34 sur les deux guides 30 sans que les guides soient en contact avec le col de la bouteille. De tels guides sous col sont connus en eux-mêmes et ne seront pas décrits plus en détail.

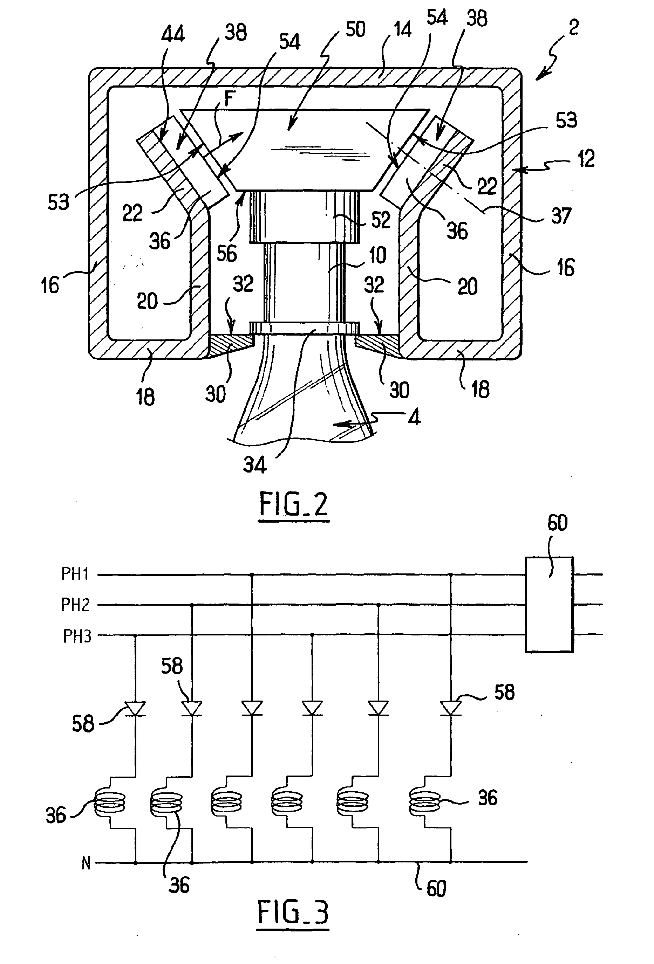

Le convoyeur comprend des bobines 36 agencées suivant deux rangées 38 s'étendant parallèlement l'une à l'autre, à distance l'une de l'autre et suivant la direction longitudinale du convoyeur. Chaque bobine 36 est logée dans un boîtier 42 en forme de parallélépipède rectangle. Chaque rangée de boîtiers avec les bobines correspondantes est disposée sur la face supérieure 44 des parois inclinées 22 respectives de sorte que les deux rangées 38 se font face. Les bobines sont disposées avec leurs spires s'étendant dans des plans essentiellement parallèles aux parois 22 les supportant. De la sorte, l'axe 37 de chaque bobine, illustré à la figure 2, est perpendiculaire à la paroi 22. Les axes de chaque bobine sont donc inclinés vers le haut et vers la bobine située en vis-à-vis. On voit donc sur la figure 2 que les deux rangées de bobines, plus précisément les deux rangées de boîtiers, délimitent entre elles un espace de forme trapézoïdale en section dans un plan perpendiculaire à la direction longitudinale du convoyeur. Cet espace va en se rétrécissant vers le bas.

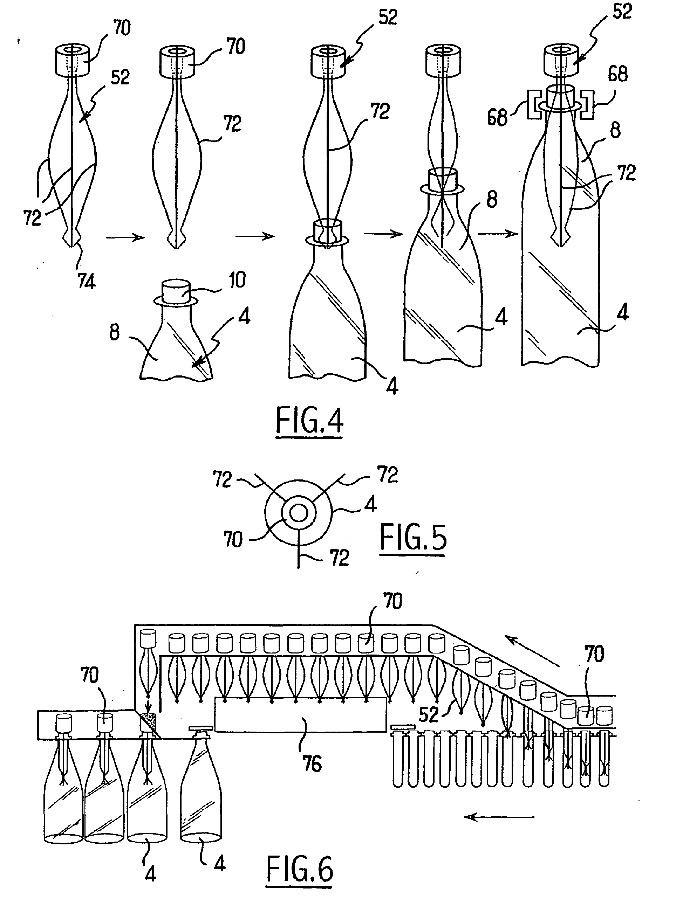

Le convoyeur comprend des navettes 50 aptes à coopérer de façon électromagnétique avec les deux rangées de bobines et constituées à cette fin en un matériau magnétique ou ferromagnétique connu en lui-même. Dans le présent exemple, chaque navette 50 comprend des moyens de préhension 52 qui seront décrits plus loin en référence à la figure 4 et permettent à la navette 50 de supporter une bouteille 4. Alternativement, il est envisageable qu'une même navette 50 supporte au moins deux bouteilles voire davantage. Dans le présent exemple, chaque bouteille est supportée par la navette correspondante en s'étendant au-dessous de celle-ci de sorte qu'elle est suspendue à la navette par l'intermédiaire des moyens de préhension 52.

Chaque navette 50 a une forme profilée suivant la direction longitudinale du convoyeur. Cette forme est en l'espèce une forme trapézoïdale dans une section suivant un plan perpendiculaire à la direction longitudinale. Cette forme trapézoïdale est pour l'essentiel complémentaire de celle de l'espace délimité entre les deux rangées de bobines. En particulier, la navette présente deux faces planes latérales inclinées 53 s'étendant directement en regard des faces principales 54 des deux rangées respectives de bobines. La navette présente une face inférieure 56 à partir de laquelle s'étendent vers le bas les moyens de préhension 52.

Les deux rangées 38 de bobines et la navette 50 coopèrent pour former d'une part un moteur linéaire apte à propulser le long du convoyeur la bouteille 4 et d'autre part des moyens de sustentation de la bouteille sur le convoyeur, notamment durant son convoyage par le moteur linéaire.

On a illustré à la figure 3 un schéma simplifié de la connexion électrique des bobines 36 à une source d'alimentation en courant triphasé. Suivant une alternance spatiale par trois le long de chaque rangée 38, les bobines sont connectées aux phases 1, 2 et 3 de la source triphasée. Ainsi, en présence d'une numérotation des bobines de chaque rangée, les bobines 1, 4 et 7 sont reliées à la phase 1, les bobines 2,5 et 8 sont reliées à la phase 2, et les bobines 3,6 et 9 sont reliées à la phase 3. De plus, les bobines se faisant face dans les rangées respectives sont reliées à la même phase. Une diode 58 est interposée entre chaque bobine 36 et la phase correspondante afin d'autoriser le passage du courant dans un seul sens de sorte que la force produite par les bobines tend à repousser la navette vers le haut. Naturellement toutes les bobines sont par ailleurs reliées au conducteur neutre 60.

Dans ces conditions, chaque bobine ne peut avoir que deux états, à savoir d'une part un état dans lequel elle ne produit aucune force d'origine électromagnétique, d'autre part un état dans lequel elle produit une force F parallèle à l'axe 37 de la bobine, inclinée vers le haut et vers la rangée opposée et illustrée à la figure 2.

Grâce à la présence des forces F générées simultanément dans deux bobines en regard, on réalise la sustentation magnétique de la navette au cours de laquelle la résultante des deux forces F s'exerce sur l'ensemble navette-bouteille dans une direction opposée au poids de cet ensemble et avec une sollicitation d'intensité supérieure à ce poids. Cet ensemble se trouve ainsi légèrement surélevé sous l'effet des forces F, ce qui conduit à décoller le relief annulaire 34 des guides profilés 30. Ainsi la navette magnétique 50 reçoit par induction magnétique des sollicitations fournies par les bobines permettant sa sustentation magnétique.

En outre, grâce au décalage d'un tiers de période fourni par le secteur triphasé et alimentant successivement chaque bobine, la navette se trouve propulsée le long de la voie de transport suivant la technique connue en elle-même du moteur linéaire. On voit que les moyens de propulsion à moteur linéaire constituent ici les moyens de sustentation des bouteilles.

Le convoyeur comprend des variateurs de vitesse 60 illustrés à la figure 3 associés à des tronçons prédéterminés du convoyeur. Chaque variateur 60 comprend des moyens connus en eux-mêmes pour faire varier la fréquence de la tension électrique alimentant les bobines de ce tronçon afin d'y modifier la vitesse du moteur linéaire propulsant la navette. Chacun de ces variateurs peut par ailleurs être agencé pour permettre de choisir le sens de déplacement des navettes sur un tronçon donné, par exemple pour inverser en cours de convoyage le sens de déplacement d'une bouteille.

On va décrire maintenant en référence aux figures 4 à 6 les moyens de préhension 52 assurant la liaison de chaque bouteille 4 avec la navette 50 associée. Pour chaque navette 50, les moyens de préhension 52 comprennent un support 70 de forme générale cylindrique à section circulaire dans un plan horizontal. Ces moyens comprennent par ailleurs des tiges 72 qui sont ici au nombre de trois. Les tiges 72 sont formées dans un matériau élastiquement flexible tel qu'un métal à ressort. Chaque tige est reliée par son extrémité supérieure au support 70. Chaque tige 72 a essentiellement une forme allongée en arc de cercle. Les trois tiges 72 sont disposées de sorte que leurs extrémités fixées au support 70 soient voisines les unes des autres. De plus, elles sont agencées de sorte qu'au repos leurs extrémités inférieures 74 soient également voisines les unes des autres, les tiges étant distantes les unes des autres par leur partie médiane. Chaque extrémité inférieure 74 présente deux coudes en sens inverses donnant à cette extrémité un profil plan en « S ».

Comme illustré à la figure 4, grâce à cette conformation des moyens de préhension, il est possible de les introduire dans la bouteille 4 de la façon suivante. On présente les moyens 52 au-dessus du col 10 de la bouteille dans une disposition coaxiale à l'orifice de la bouteille. On abaisse les moyens 52 par rapport à la bouteille jusqu'à mettre la naissance des arcs de cercle en contact avec le bord de l'orifice de la bouteille. On sollicite ensuite à partir du support 70 les moyens de préhension 52 pour les forcer à pénétrer dans la bouteille. Lorsqu'une intensité de cette sollicitation dépasse un seuil facile à déterminer empiriquement par l'homme du métier, les tiges 72 se resserrent radialement les unes contre les autres au niveau de leurs arcs de cercle en commençant par le bas pour réduire la dimension radiale totale des moyens 52. Grâce à ce resserrement, les moyens 52 peuvent commencer à pénétrer à travers l'orifice de la bouteille. La pénétration se poursuit à mesure que les tiges toujours en appui sur le bord de l'orifice se resserrent pour réduire encore la dimension radiale des moyens 52. Lorsque la plus grande partie des tiges s'étend dans la bouteille, les tiges s'écartent élastiquement les unes des autres pour tendre à retrouver leur position initiale et augmenter ainsi la dimension radiale des moyens de préhension à l'intérieur de la bouteille. Lorsque le support 70 est voisin du col 10 ou contigu à celui-ci, les tiges 72 s'étendent sur leur plus grande partie à l'intérieur de la bouteille et sont au contact intérieurement de la partie supérieure rétrécie 8.

Les moyens de préhension sont agencés de sorte que le poids de la bouteille est insuffisant pour rétracter radialement les tiges 72 ainsi introduites,. Par conséquent, lorsqu'on soulève ensuite le support 70, la bouteille se trouve solidarisée avec les moyens de préhension s'étendant à l'intérieur de celle-ci.

Les moyens de préhension 52 peuvent servir pour solidariser à la navette 50 la bouteille 4 aussi bien sous sa forme achevée illustrée à la figure 1 et en partie gauche de la figure 6 que lorsqu'elle se présente comme une préforme essentiellement tubulaire illustrée à la partie droite de la figure 6. Dans ce dernier cas, compte tenu de la forme essentiellement tubulaire de la préforme, la coopération entre les moyens 52 et la préforme se fait par friction mutuelle et non pas par complémentarité de forme comme c'était le cas sur la figure 4.

Lorsque la bouteille est supportée par les moyens de préhension 52 et que son relief annulaire 34 s'étend au-dessus des guides profilés 30, ceux-ci servent au guidage de la partie supérieure 8 de la bouteille notamment dans les tronçons courbes du convoyeur.

On a illustré à la figure 6 un tronçon d'une installation pour la fabrication d'articles comprenant les bouteilles 4. Cette installation comprend le convoyeur 2 selon le premier mode de réalisation. Le tronçon illustré comprend une souffleuse 76 permettant de donner leur forme définitive aux bouteilles 4 à partir des préformes.

Comme on le voit sur la figure 6, les préformes arrivent au voisinage de la souffleuse 76 en étant supportées par les moyens de liaison 52. Avant l'entrée des préformes dans la souffleuse 76, ces moyens sont extraits des préformes. Pour cela, on pourra prévoir tout dispositif permettant de solliciter les moyens de préhension 52 en vue de leur extraction des préformes. A cette fin, comme illustré à la figure 4, les préformes pourront être acheminées sur un dernier tronçon avant leur arrivée à ce poste par un convoyeur comprenant deux guides profilés 68 ayant chacun une forme en « U » et recevant les reliefs 34 respectifs et permettant de maintenir ceux-ci à l'encontre de la sollicitation vers le haut exercée par les moyens de préhension 52 lors de leur extraction de la préforme.

A la sortie de la souffleuse 76, les moyens de préhension 52 sont à nouveau introduits dans la bouteille 4 qui a maintenant sa forme achevée, de la façon déjà expliquée en référence à la figure 4.

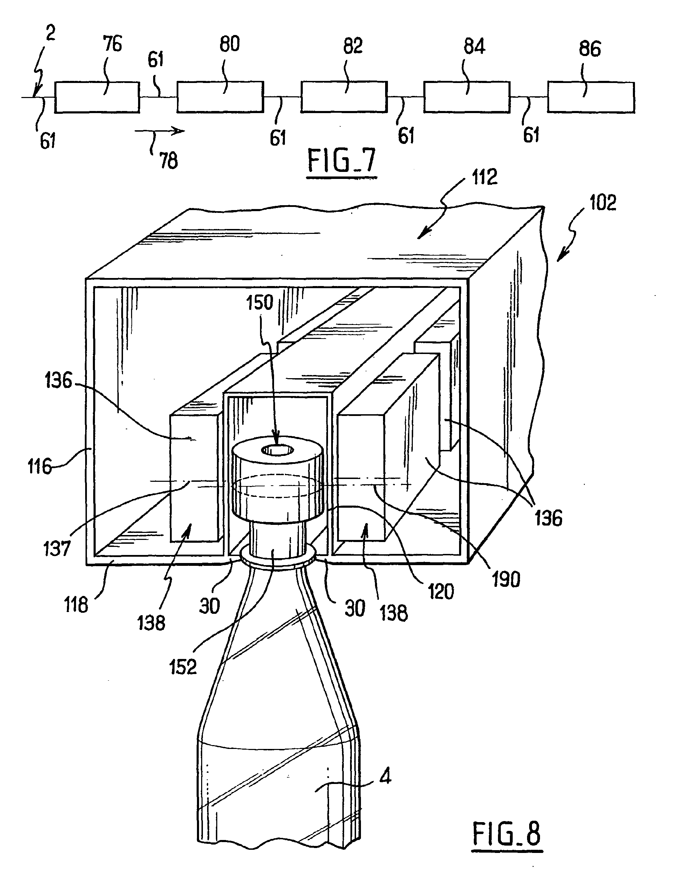

Sur la figure 7, en aval de la souffleuse 76 par référence à un sens de déplacement des articles illustrés par la flèche 78, l'installation comprend une soutireuse 80 permettant de remplir les bouteilles avec leur liquide de destination. Elle comprend ensuite et par ordre un poste 82 pour l'étiquetage des bouteilles, un poste de suremballage 84 pour emballer un commun un groupe prédéterminé de bouteilles et enfin un poste 86 de bouchonage. Au moyen des variateurs 60, les vitesses de convoyage pourront être différentes sur les tronçons 61 de convoyeur s'étendant respectivement entre les différents postes. Bien entendu, on pourrait modifier l'ordre de ces différents postes.

Comme illustré à la figure 1, la navette 50 ainsi que les moyens de préhension 52 comprennent un conduit 88 d'axe vertical coaxial à un axe de la bouteille et donnant libre accès à partir de la face supérieure de la navette à l'intérieur de la bouteille 4. De cette façon, il est possible de réaliser au stade de la soutireuse 80 un remplissage en ligne de la bouteille toujours supportée par la navette 50 au moyen d'un jet de liquide 90 traversant la navette et les moyens de préhension pour arriver dans la bouteille. Toutefois, à partir de la soutireuse 80, on pourra prévoir que les moyens de préhension 52 sont remplacés par les guides sous col 30 compte tenu du poids de la bouteille remplie. A ce stade, il n'y a donc plus de sustentation magnétique de la bouteille en elle-même. Toutefois, la navette toujours en sustentation magnétique continue à entraîner la bouteille le long du convoyeur.

Le poste d'étiquetage 82 s'étendant en amont ou en aval de la soutireuse permettra d'apposer une marque sur la bouteille toujours acheminée sur le convoyeur à la faveur d'un bref arrêt de la bouteille sur le convoyeur.

Nous allons maintenant décrire un deuxième mode de réalisation du convoyeur selon l'invention en référence aux figures 8 à 10. Dans la description qui va suivre, les références numériques de certains éléments analogues à ceux du premier mode sont augmentées de 100.

Dans ce mode de réalisation, les moyens de propulsion et de sustentation magnétique comprennent encore deux rangées138 de bobines 136. Toutefois celles-ci sont maintenant disposées contre les parois verticales internes 20, du côté de celles-ci ne faisant pas face aux bouteilles. Cette fois, les bobines ont donc leur axe 137 horizontal, les axes des bobines en regard dans les deux rangées étant confondus.

La navette 150 a cette fois une forme différente de celle de la figure 1, par exemple une forme cylindrique de révolution d'axe vertical coaxial à celui de la bouteille. La navette est agencée de sorte que, lorsque les moyens de sustentation sont au repos et que la bouteille repose par l'intermédiaire du relief annulaire 34 sur les guides 30, un axe principal 190 de la navette pour le passage des lignes de champ générées par les bobines s'étend légèrement au-dessous de l'axe 137 des bobines.

De plus, dans le présent exemple, les bobines sont configurées pour générer une force, non pas repoussant la navette à l'encontre des bobines comme dans le premier mode de réalisation, mais attirant celle-ci. Par conséquent, lorsque les bobines sont excitées, la navette aura tendance à remonter pour positionner son axe magnétique 190 au niveau de l'axe 137 des bobines, supprimant ainsi le contact du relief 34 avec les guides 30. Le reste de la propulsion et de la sustentation se déroule comme dans le premier mode au moyen de la coopération entre les deux rangées de bobines 136 et la navette 150. Ici encore, on pourra prévoir les moyens de préhension 52.

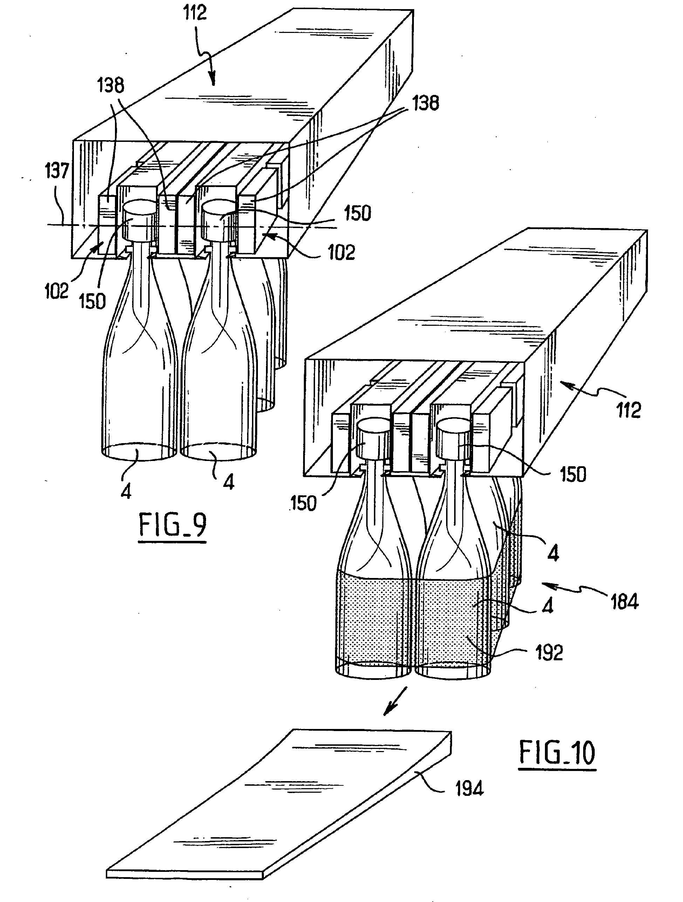

Dans le présent mode de réalisation, l'installation comprend deux convoyeurs 102 ayant des tronçons parallèles et contingus l'un à l'autre pour l'acheminement des bouteilles de façon contiguë sur ces tronçons. Comme illustré à la figure 9, les tronçons peuvent avoir alors un capotage commun 112. Un tel agencement permet, comme illustré à la figure 10, de mettre en place au poste de suremballage 184 un suremballage 192 commun à plusieurs bouteilles respectives des convoyeurs, par exemple comme illustré à trois bouteilles de l'un des convoyeurs et à trois bouteilles de l'autre convoyeur. Par exemple, le suremballage des bouteilles a lieu à la faveur d'un court arrêt des deux convoyeurs. Ce suremballage pourra être effectué par exemple par manchonnage.

Après le poste de suremballage, les bouteilles peuvent être déposées sur une plate-forme 194 de transfert vers le poste de bouchonnage. La plate-forme 194 est par exemple un convoyeur à bandes. Une fois les navettes et les moyens de préhension séparés des bouteilles respectives, ceux-ci pourront rejoindre le début de la chaîne en étant transportés par le ou les mêmes convoyeurs.

Grâce aux possibilités de modulation de la vitesse sur différents tronçons du ou de chaque convoyeur, on pourra optimiser l'accumulation, la limitation, l'arrêt ou bien l'accélération des bouteilles aux différents stades de la fabrication.

L'invention n'est pas limitée à l'acheminement de bouteilles mais pourra plus généralement être appliquée à des récipients de formes et de matériaux variés. On remarquera que l'invention n'engendre aucune contrainte sur la forme ou les dimensions de la bouteille et est compatible avec des formes de récipients très variées.

L'invention pourra être mise en oeuvre au moyen d'un moteur linéaire synchrone ou asynchrone. Un avantage de l'invention est notamment le fait que l'on peut se dispenser de prévoir des roues sur la navette, ce qui réduit les problèmes de bruit et d'usure associés.

## Revendications

1. Convoyeur (2;102) de récipients tels que des bouteilles (4), comportant des moyens (38, 50 ;138,150) de propulsion d'un récipient, ces moyens comprenant un moteur linéaire, **caractérisé en ce qu**'il comprend des moyens (38, 50; 138,150) de sustentation magnétique du récipient.

2. Convoyeur selon la revendication 1, **caractérisé en ce que** les moyens de propulsion (38,50 ; 138, 150) forment les moyens de sustentation.

3. Convoyeur selon la revendication précédente, **caractérisé en ce qu**'il comprend au moins une navette (50 ;150) apte à supporter au moins un récipient (4), les moyens de propulsion étant aptes à propulser la navette et les moyens de sustentation étant aptes à porter la navette.

4. Convoyeur selon la revendications 3, **caractérisé en ce qu**'il est agencé de sorte que le récipient (4) est suspendu à la navette (50;150).

5. Convoyeur selon l'une quelconque des revendications 3 ou 4, **caractérisé en ce qu'**il comprend deux rangées parallèles (38 ;138) de bobines (36) aptes à coopérer de façon électromagnétique avec la navette (50 ;150).

6. Convoyeur selon la revendication 5, **caractérisé en ce qu**'il est agencé de sorte que la navette (50) repose sur les rangées (38) de bobines (36) lorsque les moyens de sustentation sont inactifs.

7. Convoyeur selon l'une quelconque des revendications 5 à 6, **caractérisé en ce que** les bobines (36) de chaque rangée (38) ont un axe (37) incliné vers le haut et vers l'autre rangée de bobines.

8. Convoyeur selon l'une quelconque des revendications 5 à 7, **caractérisé en ce que** les bobines (36) des deux rangées (38) présentent des faces (54) en regard formant un espace qui va en se rétrécissant vers le bas dans un plan transversal à une direction longitudinale du convoyeur, la navette (50) ayant une forme complémentaire qui va en se rétrécissant vers le bas dans le même plan.

9. Convoyeur selon l'une quelconque des revendications 5 à 8, **caractérisé en ce qu**'il est agencé de sorte que chaque bobine (36) peut avoir seulement deux états, à savoir un état dans lequel elle ne produit aucun champ magnétique et un état dans lequel elle produit un champ magnétique tendant à repousser la navette (50) à l'encontre de la gravité.

10. Convoyeur selon l'une quelconque des revendications 3 à 9, **caractérisé en ce qu**'elle est agencée de sorte que, lorsque la navette (50 ; 150) supporte le récipient (4), la navette laisse libre un accès à l'intérieur du récipient pour remplir le récipient.

11. Convoyeur selon l'une quelconque des revendications 3 à 10, **caractérisé en ce qu**'il comprend des moyens (52) pour relier la navette (50 ; 150) au récipient (4) présentant une dimension radiale variable par rapport à un axe principal du récipient.

12. Convoyeur selon la revendication 11, **caractérisé en ce que** les moyens de liaison (52) sont aptes à relier la navette au récipient en s'étendant à l'intérieur du récipient.

13. Convoyeur selon l'une quelconque des revendications 11 ou 12, **caractérisé en ce que** les moyens de liaison (52) sont aptes à s'étendre en contact avec une partie supérieure rétrécie (8) du récipient (4).

14. Convoyeur selon l'une quelconque des revendications 11 à 13, **caractérisé en ce que** les moyens de liaison (52) sont élastiquement flexibles.

15. Convoyeur selon l'une quelconque des revendications 11 à 14, **caractérisé en ce que** les moyens de liaison (52) comprennent au moins une tige, de préférence au moins deux tiges (72).

16. Convoyeur selon l'une quelconque des revendications 11 à 15, **caractérisé en ce que** les moyens de liaison (52) sont agencés pour interrompre la liaison du récipient (4) à la navette (50) lorsque le récipient subit une sollicitation tendant à l'éloigner de la navette et présentant une intensité dépassant un seuil prédéterminé.

17. Convoyeur selon l'une quelconque des revendications 11 à 16, **caractérisé en ce que** les moyens de liaison (52) sont agencés pour pénétrer dans un orifice rétréci du récipient en réduisant leur dimension radiale par coopération de forme avec l'orifice lorsqu'ils subissent une sollicitation en direction du récipient présentant une intensité dépassant un seuil prédéterminé.

18. Convoyeur selon l'une quelconque des revendications 5 à 17, **caractérisé en ce que** les bobines (136) ont un axe (137) horizontal.

19. Convoyeur selon l'une quelconque des revendications 1 à 18, **caractérisé en ce qu**'il comprend des moyens (36, 30) pour supporter les récipients (4) lorsque les moyens de sustentation sont inactifs.

20. Convoyeur selon la revendication 19, **caractérisé en ce que** les moyens de support comprennent deux profilés (30) aptes à supporter un col (10) des récipients.

21. Convoyeur selon l'une quelconque des revendications 1 à 20, **caractérisé en ce que** les moyens de propulsion (38, 50 ; 138, 150) sont agencés pour permettre de commander différentes vitesses de propulsion sur des tronçons différents (61) respectifs du convoyeur.

22. Convoyeur selon l'une quelconque des revendications 1 à 21, **caractérisé en ce que** les moyens de propulsion (38, 50 ; 138, 150) sont agencés pour permettre de propulser un récipient suivant deux sens différents au choix sur un même tronçon du convoyeur.

23. Installation pour la production d'articles comprenant un récipient (4), **caractérisée en ce qu**'elle comprend un convoyeur (2 ;102) selon l'une des revendications 1 à 22.

24. Installation selon la revendication 23, **caractérisée en ce qu**'elle comprend au moins deux convoyeurs (102) présentant des tronçons respectifs parallèles et contigus l'un à l'autre.

25. Installation selon l'une quelconque des revendications 23 ou 24, **caractérisée en ce qu**'elle comprend un poste (184) pour le suremballage commun de plusieurs récipients (4) des convoyeurs respectifs.

26. Installation selon l'une quelconque des revendications 23 à 25, **caractérisée en ce qu**'elle comprend au moins l'un parmi les postes suivants :
- un poste de formage du récipient ;
- un poste de remplissage du récipient ;
- un poste de bouchonnage ;
- un poste de suremballage ; et
- un poste d'étiquetage.

## Claims

1. Conveyor (2; 102) for containers such as bottles (4), comprising means (38, 50; 138, 150) of propulsion of a container, these means comprising a linear motor, **characterized in that** it comprises means (38, 50; 138, 150) of magnetic levitation of the container.

2. Conveyor according to Claim 1, **characterized in that** the means of propulsion (38, 50; 138, 150) form the means of levitation.

3. Conveyor according to the preceding claim, **characterized in that** it comprises at least one shuttle (50; 150) able to support at least one container (4), the means of propulsion being able to propel the shuttle and the means of levitation being able to carry the shuttle.

4. Conveyor according to Claim 3, **characterized in that** it is designed so that the container (4) is suspended from the shuttle (50; 150).

5. Conveyor according to any one of Claims 3 or 4, **characterized in that** it comprises two parallel rows (38; 138) of coils (36) able to cooperate electromagnetically with the shuttle (50; 150).

6. Conveyor according to Claim 5, **characterized in that** it is designed so that the shuttle (50) rests on the rows (38) of coils (36) when the means of levitation are inactive.

7. Conveyor according to any one of Claims 5 to 6, **characterized in that** the coils (36) of each row (38) have an axis (37) inclined upwards and towards the other row of coils.

8. Conveyor according to any one of Claims 5 to 7, **characterized in that** the coils (36) of the two rows (38) exhibit opposing faces (54) forming a space which continues to narrow downwards in a plane transverse to a longitudinal direction of the conveyor, the shuttle (50) having a complementary shape which continues to narrow downwards in the same plane.

9. Conveyor according to any one of Claims 5 to 8, **characterized in that** it is designed so that each coil (36) can have only two states, namely a state in which it produces no magnetic field and a state in which it produces a magnetic field tending to repel the shuttle (50) against gravity.

10. Conveyor according to any one of Claims 3 to 9, **characterized in that** it is designed so that, when the shuttle (50; 150) supports the container (4), the shuttle leaves free an accessway to the interior of the container in order to fill the container.

11. Conveyor according to any one of Claims 3 to 10, **characterized in that** it comprises means (52) for linking the shuttle (50; 150) to the container (4) exhibiting a variable radial dimension with respect to a principal axis of the container.

12. Conveyor according to Claim 11, **characterized in that** the means of linking (52) are able to link the shuttle to the container by extending inside the container.

13. Conveyor according to any one of Claims 11 or 12, **characterized in that** the means of linking (52) are able to extend in contact with a narrowed upper part (8) of the container (4).

14. Conveyor according to any one of Claims 11 to 13, **characterized in that** the means of linking (52) are elastically flexible.

15. Conveyor according to any one of Claims 11 to 14, **characterized in that** the means of linking (52) comprise at least one rod, preferably at least two rods (72).

16. Conveyor according to any one of Claims 11 to 15, **characterized in that** the means of linking (52) are designed to interrupt the linking of the container (4) to the shuttle (50) when the container undergoes a loading tending to distance it from the shuttle and exhibiting an intensity exceeding a predetermined threshold.

17. Conveyor according to any one of Claims 11 to 16, **characterized in that** the means of linking (52) are designed to enter a narrowed orifice of the container by decreasing their radial dimension by cooperation of shape with the orifice when they undergo a loading in the direction of the container exhibiting an intensity exceeding a predetermined threshold.

18. Conveyor according to any one of Claims 5 to 17, **characterized in that** the coils (136) have a horizontal axis (137).

19. Conveyor according to any one of Claims 1 to 18, **characterized in that** it comprises means (36, 30) for supporting the containers (4) when the means of levitation are inactive.

20. Conveyor according to Claim 19, **characterized in that** the means of support comprise two members (30) able to support a neck (10) of the containers.

21. Conveyor according to any one of Claims 1 to 20, **characterized in that** the means of propulsion (38, 50; 138, 150) are designed to make it possible to control various speeds of propulsion over respective different stretches (61) of the conveyor.

22. Conveyor according to any one of Claims 1 to 21, **characterized in that** the means of propulsion (38, 50; 138, 150) are designed to make it possible to propel a container in two opposite directions by choice over one and the same stretch of the conveyor.

23. Installation for the production of articles comprising a container (4), **characterized in that** it comprises a conveyor (2; 102) according to one of Claims 1 to 22.

24. Installation according to Claim 23, **characterized in that** it comprises at least two conveyors (102) exhibiting respective mutually contiguous and parallel stretches.

25. Installation according to any one of Claims 23 or 24, **characterized in that** it comprises a station (184) for the common overwrapping of several containers (4) of the respective conveyors.

26. Installation according to any one of Claims 23 to 25, **characterized in that** it comprises at least one from among the following stations:
- a container forming station;
- a container filling station;
- a capping station;
- an overwrapping station; and
- a labelling station.

## Patentansprüche

1. Transportvorrichtung (2; 102) für Behälter wie etwa Flaschen (4), die Mittel (38, 50; 138, 150) zum Vortrieb eines Behälters aufweist, wobei diese Mittel einen Linearmotor umfassen, **dadurch gekennzeichnet, dass** sie Mittel (38, 50; 138, 150) zum magnetischen Schweben des Behälters umfasst.

2. Transportvorrichtung nach Anspruch 1, **dadurch gekennzeichnet, dass** die Mittel zum Vortrieb (38, 50; 138, 150) die Mittel zum Schweben bilden.

3. Transportvorrichtung nach dem vorhergehenden Anspruch, **dadurch gekennzeichnet, dass** sie mindestens einen Träger (50; 150) umfasst, der geeignet ist, mindestens einen Behälter (4) zu halten, wobei die Mittel zum Vortrieb dazu eingerichtet sind, den Träger vorzutreiben, und die Mittel zum Schweben geeignet sind, den Träger zu tragen.

4. Transportvorrichtung nach Anspruch 3, **dadurch gekennzeichnet, dass** sie derart eingerichtet ist, dass der Behälter (4) am Träger (50; 150) aufgehängt ist.

5. Transportvorrichtung nach irgendeinem der Ansprüche 3 oder 4, **dadurch gekennzeichnet, dass** sie zwei parallele Reihen (38; 138) von Spulen (36) umfasst, die geeignet sind, mit dem Träger (50; 150) auf elektromagnetische Weise zusammenzuwirken.

6. Transportvorrichtung nach Anspruch 5, **dadurch gekennzeichnet, dass** sie derart eingerichtet ist, dass der Träger (50) auf den Reihen (38) von Spulen (36) ruht, während die Mittel zum Schweben nicht aktiv sind.

7. Transportvorrichtung nach irgendeinem der Ansprüche 5 bis 6, **dadurch gekennzeichnet, dass** die Spulen (36) einer jeden Reihe (38) eine Achse (37) haben, die nach oben und zur anderen Reihe von Spulen hin geneigt ist.

8. Transportvorrichtung nach irgendeinem der Ansprüche 5 bis 7, **dadurch gekennzeichnet, dass** die Spulen (36) der beiden Reihen (38) einander zugewandte Stirnflächen (54) aufweisen, die einen Zwischenraum bilden, der sich nach unten hin in einer Ebene quer zu einer Längsrichtung der Transportvorrichtung verengt, wobei der Träger (50) eine komplementäre Form aufweist, die sich in derselben Ebene nach unten verengt.

9. Transportvorrichtung nach irgendeinem der Ansprüche 5 bis 8, **dadurch gekennzeichnet, dass** sie derart eingerichtet ist, dass jede Spule (36) nur zwei Zustände aufweisen kann, und zwar einen Zustand, in dem sie keinerlei magnetisches Feld erzeugt, und einen Zustand, in dem sie ein elektrisches Feld erzeugt, das danach trachtet, den Träger (50) entgegen der Schwerkraft anzuheben.

10. Transportvorrichtung nach irgendeinem der Ansprüche 3 bis 9, **dadurch gekennzeichnet, dass** sie derart eingerichtet ist, dass dann, wenn der Träger (50; 150) den Behälter (4) trägt, der Träger einen Zugang zum Inneren des Behälters freilässt, um den Behälter zu befüllen.

11. Transportvorrichtung nach irgendeinem der Ansprüche 3 bis 10, **dadurch gekennzeichnet, dass** sie Mittel (52) zum Verbinden des Trägers (50; 150) mit dem Behälter (4) umfasst, die eine variable radiale Abmessung bezüglich einer Hauptachse des Behälters darbieten.

12. Transportvorrichtung nach Anspruch 11, **dadurch gekennzeichnet, dass** die Verbindungsmittel (52) geeignet sind, den Träger mit dem Behälter zu verbinden, indem sie sich in das Innere des Behälters hinein erstrecken.

13. Transportvorrichtung nach irgendeinem der Ansprüche 11 oder 12, **dadurch gekennzeichnet, dass** die Verbindungsmittel (52) geeignet sind, sich in Berührung mit einem oberen, verjüngten Teil (8) des Behälters (4) zu erstrecken.

14. Transportvorrichtung nach irgendeinem der Ansprüche 11 bis 13, **dadurch gekennzeichnet, dass** die Verbindungsmittel (52) elastisch flexibel sind.

15. Transportvorrichtung nach irgendeinem der Ansprüche 11 bis 14, **dadurch gekennzeichnet, dass** die Verbindungsmittel (52) mindestens eine Stange und bevorzugt zwei Stangen (72) umfassen.

16. Transportvorrichtung nach irgendeinem der Ansprüche 11 bis 15, **dadurch gekennzeichnet, dass** die Verbindungsmittel (52) dazu eingerichtet sind, die Verbindung des Behälters (4) mit dem Träger (50) zu unterbrechen, wenn der Behälter eine Belastung erfährt, die danach trachtet, ihm vom Träger zu entfernen, und eine Intensität aufweist, die einen bestimmten Schwellenwert übersteigt.

17. Transportvorrichtung nach irgendeinem der Ansprüche 11 bis 16, **dadurch gekennzeichnet, dass** die Verbindungsmittel (52) dazu eingerichtet sind, in eine verengte Öffnung des Behälters einzudringen, indem sie ihre radiale Abmessung durch Form-Zusammenwirkung mit der Öffnung verringern, wenn sie eine Belastung in Richtung des Behälters erfahren, die eine Intensität aufeist, die einen vorbestimmten Schwellenwert übersteigt.

18. Transportvorrichtung nach irgendeinem der Ansprüche 5 bis 17, **dadurch gekennzeichnet, dass** die Spulen (136) eine horizontale Achse (137) haben.

19. Transportvorrichtung nach irgendeinem der Ansprüche 1 bis 18, **dadurch gekennzeichnet, dass** sie Mittel (36, 30) umfasst, um die Behälter (4) zu halten, wenn die Mittel zum Schweben nicht aktiv sind.

20. Transportvorrichtung nach Anspruch 19, **dadurch gekennzeichnet, dass** die Mittel zum Halten zwei Profile (30) umfassen, die geeignet sind, einen Hals (10) der Behälter zu halten.

21. Transportvorrichtung nach irgendeinem der Ansprüche 1 bis 20, **dadurch gekennzeichnet, dass** die Vortriebsmittel (38, 50; 138, 150) dazu eingerichtet sind, auf den jeweils unterschiedlichen Stücken (61) der Transportvorrichtung das Ansteuern unterschiedlicher Vortriebsgeschwindigkeiten zu gestatten.

22. Transportvorrichtung nach irgendeinem der Ansprüche 1 bis 21, **dadurch gekennzeichnet, dass** die Vortriebsmittel (38, 50; 138, 150) dazu eingerichtet sind, den Vortrieb eines Behälters auf demselben Stück der Transporteinrichtung wahlweise in zwei verschiedenen Richtungen zu gestatten.

23. Anlage zur Erzeugung von Gegenständen, die einen Behälter (4) umfassen, **dadurch gekennzeichnet, dass** sie eine Transportvorrichtung (2; 102) nach einem der Ansprüche 1 bis 22 umfasst.

24. Anlage nach Anspruch 23, **dadurch gekennzeichnet, dass** sie mindestens zwei Transportvorrichtungen (102) umfasst, die jeweils parallele und aneinander angrenzende Stücke aufweisen.

25. Anlage nach irgendeinem der Ansprüche 23 oder 24, **dadurch gekennzeichnet, dass** sie eine Stelle (184) für das gemeinsame Verpacken mehrerer Behälter (4) der jeweiligen Transportvorrichtungen umfasst.

26. Anlage nach irgendeinem der Ansprüche 23 bis 25, **dadurch gekennzeichnet, dass** sie unter den folgenden Stellen mindestens eine umfasst:
- eine Stelle zur Formung des Behälters;
- eine Stelle zur Füllung des Behälters;
- eine Stelle zum Verschließen;
- eine Stelle zum Verpacken; und
- eine Stelle zum Etikettieren.
